# FASCICULE DE BREVET EUROPEEN

(11) **EP 1 081 630 B1**
(45) Date de publication et mention de la délivrance du brevet: **07.11.2007**
(21) Numéro de dépôt: 00203008.8
(22) Date de dépôt: 29.08.2000
(51) Int. Cl.: G06K 7/00

(54) **Procédé permettant un échange de données entre une carte à puce et un appareil en cas d'interruption intempestive de l'alimentation de l'appareil**
Verfahren zur Datenübertragung zwischen einer Chipkarte und einem Leser im Falle eines ungewollten Stromausfalles
Procedure allowing datacommunication between a chip card and a reader in case of accidental interruption of power to the reader

(30) Priorité: 31.08.1999 FR 9910953
(43) Date de publication de la demande: 07.03.2001
(73) Titulaire: NXP B.V., 5656 AG Eindhoven (NL)
(72) Inventeur: Maugars, Philippe, 75008 Paris (FR)
(74) Mandataire: Röggla, Harald

(56) Documents cités:
- EP-A- 0 317 068
- EP-A- 0 617 379
- EP-A- 0 932 112
- US-A- 4 653 054

## Description

La présente invention concerne un procédé permettant à une carte à puce d'échanger des données avec un appareil, ledit appareil comportant un oscillateur, dit permanent, destiné à fournir à la carte à puce un signal d'horloge dit permanent dans un régime de fonctionnement permanent.

Une carte à puce présente, disposé sur sa surface, un circuit intégré muni de bornes destinées à être mises en contact électrique avec des bornes d'un connecteur inclus dans l'appareil, qui est le plus souvent un appareil destiné à recevoir et/ou émettre des données, comme un radiotéléphone portable, ou un ordinateur relié à un réseau, ou encore un décodeur de signaux de télévision. Le circuit intégré contient en général des données nécessaires au fonctionnement de l'appareil, par exemple un code permettant d'identifier l'utilisateur qui a inséré la carte à puce dans l'appareil, et les fonctions que l'appareil est autorisé à remplir pour cet utilisateur.
Les interactions entre l'appareil et la carte à puce sont décrites dans une norme ISO/IEC 7816-3:1997.
Une phase dite d'activation de la carte à puce se déroule en deux temps : dans un premier régime de fonctionnement, dit régime de fonctionnement transitoire, le système constitué par l'association de la carte à puce avec l'appareil n'est pas encore opérationnel. L'appareil doit d'abord détecter la présence de la carte à puce, puis placer le circuit intégré présent à la surface de celle-ci dans ses conditions de fonctionnement nominales, c'est-à-dire, entre autres, lui fournir une tension d'alimentation ou encore initialiser des chemins de données pour que le circuit intégré puisse communiquer avec l'appareil. Dans un deuxième régime de fonctionnement, dit régime de fonctionnement permanent, le circuit intégré est alimenté en tension et reçoit un signal d'horloge permanent à une fréquence dite opérationnelle, et les chemins de données sont prêts à véhiculer des informations entre le circuit intégré et l'appareil. Au cours du régime de fonctionnement transitoire, le circuit intégré doit recevoir un signal d'horloge transitoire, dont la fréquence peut être différente de la fréquence opérationnelle. Il est préférable d'utiliser un signal ayant une fréquence, dite transitoire, inférieure à la fréquence opérationnelle, ce qui permet de réduire la consommation d'énergie du circuit intégré pendant le régime transitoire. Un tel choix est particulièrement avantageux dans des applications où la source d'énergie utilisée pour fournir au circuit intégré sa tension d'alimentation est une batterie, comme c'est généralement le cas pour un appareil portable. Le système doit donc effectuer, à la fin du régime de fonctionnement transitoire, une commutation du signal acheminé en guise de signal d'horloge au circuit intégré présent à la surface de la carte à puce. Cette commutation est réalisée par un dispositif d'aiguillage qui, lorsqu'il en reçoit l'ordre, remplace le signal d'horloge transitoire, qui constituait le signal d'horloge du circuit intégré au cours du régime de fonctionnement transitoire, par le signal d'horloge permanent destiné à constituer le signal d'horloge du circuit intégré pendant le régime de fonctionnement permanent.
La norme ISO/IEC 7816-3:1997 décrit succinctement une séquence de désactivation de la carte à puce. Une telle désactivation est opérée après la conclusion d'un échange de données entre l'appareil et le circuit intégré présent à la surface de la carte à puce, c'est-à-dire après que le régime permanent soit parvenu à son terme. Une désactivation de la carte à puce doit également être opérée lorsque l'alimentation en énergie de l'appareil est interrompue intempestivement avant le terme du régime permanent, soit par l'utilisateur lui-même, soit par accident.
La séquence de désactivation décrite par la norme ISO/IEC 7816-3:1997 prévoit, sans plus de précisions, que le signal d'horloge fourni par l'appareil au circuit intégré doit être placé et maintenu dans un état bas, matérialisé par un niveau logique 0. Or, si l'interruption de l'alimentation en énergie de l'appareil est intempestive, l'échange de données entre l'appareil et le circuit intégré risque de n'être pas encore arrivé à son terme lorsque la désactivation décrite ci-dessus est opérée. Cela signifie que quelques impulsions d'horloge sont encore nécessaires au circuit intégré, par exemple pour achever des opérations de lecture/écriture d'une mémoire non-volatile incluse dans le circuit intégré.
Une disparition pure et simple du signal d'horloge, telle celle décrite dans la norme ISO/IEC 7816-3:1997, risque donc de provoquer des pertes d'informations menant à un contenu erroné des informations mémorisées dans le circuit intégré. Ceci n'est pas acceptable, particulièrement compte tenu du fait que les informations mémorisées dans le circuit intégré d'une carte à puce servent généralement à sécuriser et/ou à facturer des transactions financières ou des communications.

US-A-4 653 054 décrit un commutateur d'horloge recevant plusieurs signaux d'horloge externes. Le commutateur comprend un détecteur de défaillance pour chaque signal d'horloge externe. Suite à une défaillance de tous les signaux d'horloge externes, le commutateur sélectionne le premier signal d'horloge externe opératif.

EP-A-0 932 112 décrit un lecteur de carte à puce muni d'un commutateur d'horloge. Un détecteur de phase assujettit toute commutation à une simultanéité des fronts actifs des signaux d'horloge.

La présente invention a pour but de remédier aux inconvénients mentionnés dans ce qui précède en proposant un procédé de désactivation permettant au circuit intégré présent à la surface de la carte à puce de mener à leur terme toutes les opérations de lecture/écriture qui sont en cours au moment où une interruption de l'alimentation en énergie de l'appareil se produit.

La revendication 1 définit un procédé selon l'invention.

Conformément à ce procédé, le signal d'horloge permanent est remplacé, avant sa disparition effective, par un signal d'horloge auxiliaire. Le circuit intégré présent à la surface de la carte à puce reçoit ainsi, après la disparition du signal d'horloge permanent, un nombre suffisant d'impulsions d'horloge pour mener à leur terme toutes les opérations de lecture/écriture en cours.

Dans une variante de l'invention, le signal d'horloge auxiliaire est constitué par le signal d'horloge transitoire, ce qui permet d'éviter de recourir à un oscillateur supplémentaire.

Dans une autre variante de l'invention, le procédé comporte une étape de synchronisation desdits signaux d'horloge.

Une telle synchronisation permet d'éviter qu'un front actif d'horloge ne parvienne de manière intempestive au circuit intégré présent à la surface de la carte à puce. Un tel front intempestif se produirait si un front actif du signal d'horloge transitoire apparaissait avant un front actif du signal d'horloge permanent, après que la substitution du signal d'horloge transitoire au signal d'horloge permanent ait été opérée, mais suffisamment tôt pour que ledit front actif du signal d'horloge transitoire ne puisse être pris en compte par le circuit intégré, du fait notamment de l'existence de chemins critiques trop longs au sein dudit circuit intégré.

Dans une autre variante de l'invention, la détection consiste en une comparaison de la valeur d'une tension d'alimentation de l'appareil avec une valeur prédéterminée.

Dans une autre variante de l'invention, la détection consiste en une comparaison de la valeur de l'amplitude du signal d'horloge permanent avec une valeur prédéterminée.

La revendication 6 définit un appareil apte à communiquer avec une carte à puce selon l'invention.

Dans un tel appareil, le signal d'horloge auxiliaire est aiguillé vers la borne d'horloge du connecteur dès qu'une interruption intempestive de l'alimentation en énergie de l'appareil est détectée, ayant comme conséquence inévitable la disparition du signal d'horloge permanent.

Dans un mode de réalisation avantageux de l'invention, l'appareil comprend en outre un module d'interface, via lequel la carte à puce est destinée à échanger des données avec le microcontrôleur, ledit module d'interface comprenant un oscillateur, dit transitoire, destiné à fournir à la borne d'horloge un signal d'horloge transitoire dans un régime de fonctionnement transitoire, ledit signal d'horloge transitoire constituant le signal d'horloge auxiliaire.

Du fait que le module d'interface est réalisé sous forme intégrée, et donc alimenté sous une tension plus basse que la tension nécessaire à l'appareil pour générer le signal d'horloge permanent, le signal d'horloge transitoire perdurera plus longtemps que le signal d'horloge permanent après que l'alimentation en énergie de l'appareil aura été interrompue. Ce délai est suffisant pour assurer au circuit intégré la fourniture d'impulsions d'horloge en nombre suffisant pour mener à leur terme toutes les opérations de lecture/écriture en cours lors de l'interruption de l'alimentation en énergie de l'appareil.

L'invention sera mieux comprise à l'aide de la description suivante, faite à titre d'exemple non-limitatif et en regard des dessins annexés, dans lesquels :
- la figure 1 est un schéma fonctionnel partiel décrivant un appareil mettant en oeuvre le procédé selon l'invention,
- la figure 2 est un schéma électrique décrivant un système de détection présent dans un appareil selon un mode de réalisation particulier de l'invention,
- la figure 3 est un schéma électrique décrivant un système de détection présent dans un appareil selon un autre mode de réalisation particulier de l'invention, et
- la figure 4 est un schéma fonctionnel décrivant un dispositif de synchronisation présent dans un appareil mettant en oeuvre une variante du procédé mentionné ci-dessus.

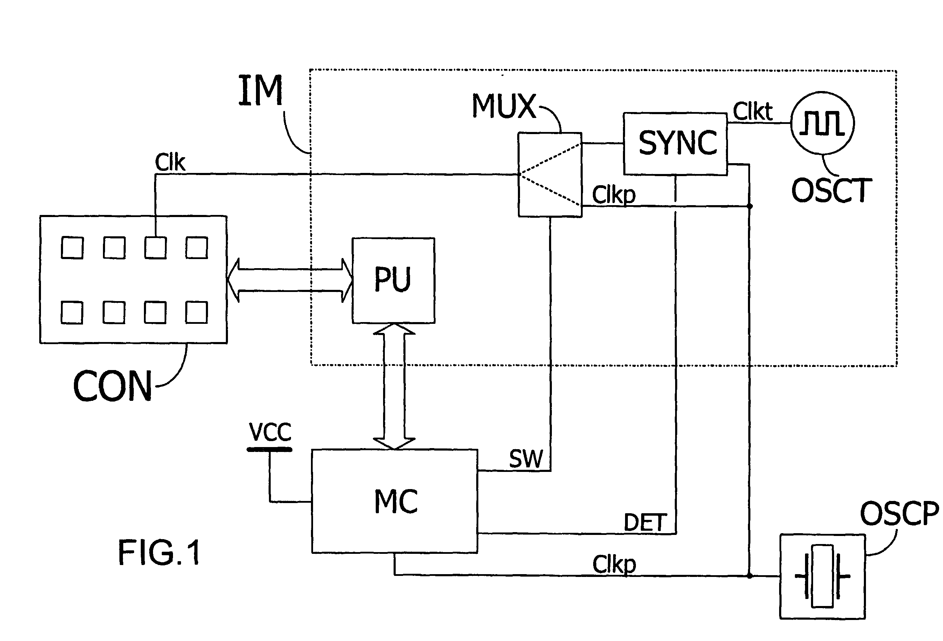

La figure 1 représente schématiquement un appareil destiné à communiquer avec une carte à puce, lequel appareil comprend :
- un connecteur CON destiné à être relié électriquement à un circuit intégré présent à la surface de ladite carte à puce, et présentant au moins une borne, dite d'horloge, destinée à délivrer audit circuit intégré un signal d'horloge Clk,
- un microcontrôleur MC destiné à échanger des données avec ledit circuit intégré,
- un module d'interface IM, disposé entre le connecteur CON et le microcontrôleur MC, comportant un oscillateur OSCT, appelé oscillateur transitoire, et destiné à générer un signal d'horloge transitoire Clkt, le module d'interface comportant en outre une unité de traitement PU permettant un échange de données entre le microcontrôleur MC et le circuit intégré,
- un oscillateur OSCP, appelé oscillateur permanent, destiné à générer un signal d'horloge permanent Clkp. Cet appareil comporte de plus un dispositif d'aiguillage MUX, intégré, dans cet exemple, au sein du module d'interface IM, et destiné à acheminer vers la borne d'horloge le signal d'horloge transitoire Clkt dans un régime de fonctionnement dit transitoire, et le signal d'horloge permanent Clkp dans un régime de fonctionnement dit permanent.
Cet appareil comprend en outre :
- des moyens de détection d'une disparition imminente du signal d'horloge permanent Clkp, et
- des moyens de commande permettant, au cours du régime de fonctionnement permanent, l'aiguillage d'un signal d'horloge auxiliaire vers la borne d'horloge lorsqu'une disparition imminente du signal d'horloge permanent Clkp est détectée. Dans le mode de réalisation décrit ici, le signal d'horloge auxiliaire est constitué par le signal d'horloge transitoire Clkt. Ceci permet d'éviter de recourir à un troisième oscillateur pour générer le signal d'horloge auxiliaire. Les moyens de détection et de commande sont intégrés, dans le mode de réalisation décrit par la présente figure, au sein du microcontrôleur MC et ne sont donc pas visibles sur la figure. Ils seront décrits de manière plus détaillée dans la suite de l'exposé. L'appareil décrit ici comporte de plus des moyens de synchronisation SYNC des signaux d'horloge transitoire et permanent Clkt et Clkp, destinés à être activés lorsqu'une disparition imminente du signal d'horloge permanent Clkp est détectée.
Cet appareil permet de mettre en oeuvre le procédé suivant pour désactiver la carte à puce avec laquelle il échange des données :
Lorsqu'une interruption intempestive de l'alimentation en énergie de l'appareil se produit, la disparition imminente du signal d'horloge permanent Clkp, qui était jusqu'alors aiguillé vers la borne d'horloge du connecteur CON, est détectée par les moyens de détection inclus au sein du microcontrôleur MC. Ces moyens de détection délivrent un signal DET qui prend alors un état actif. L'état actif du signal de détection DET active les moyens de synchronisation SYNC inclus dans l'appareil selon la variante de l'invention décrite par la présente figure. Simultanément, l'état actif du signal de détection DET active les moyens de commande, qui génèrent un signal de commande SW. Ce signal de commande SW a pour fonction de piloter le dispositif d'aiguillage MUX, qui sera par exemple constitué par un multiplexeur présentant deux entrées de données recevant les signaux d'horloge transitoire et permanent Clkt et Clkp et présentant une entrée de sélection recevant le signal de commande SW. Le câblage de ce multiplexeur sera par exemple choisi de sorte que, lorsque le signal de commande SW est à un niveau logique 0, le signal d'horloge transitoire Clkt est aiguillé par le multiplexeur vers la borne d'horloge, et lorsque le signal de commande SW est à un niveau logique 1, le signal d'horloge permanent Clkp est aiguillé par le multiplexeur vers la borne d'horloge.
Lorsque le dispositif d'aiguillage MUX en reçoit l'ordre, matérialisé par un changement d'état du signal de commande SW, et après que les signaux d'horloge transitoire et permanent Clkt et Clkp aient été synchronisés, c'est-à-dire qu'ils présentent des fronts actifs simultanés, ledit dispositif d'aiguillage MUX substitue au signal d'horloge permanent Clkp le signal d'horloge transitoire Clkt, en aiguillant ledit signal d'horloge transitoire Clkt vers la borne d'horloge. Le signal d'horloge permanent Clkp peut alors disparaître sans pour autant que les opérations menées par le circuit intégré au moment de l'interruption de l'alimentation en énergie de l'appareil ne soient brutalement interrompues avant leur conclusion normale. En effet, le module d'interface est réalisé sous forme intégrée, et donc alimenté sous une tension plus basse que la tension VCC nécessaire à l'oscillateur permanent OSCP, qui est généralement un oscillateur à quartz, pour générer le signal d'horloge permanent Clkp. Le signal d'horloge transitoire Clkt perdurera donc plus longtemps que le signal d'horloge permanent Clkp après que l'alimentation en énergie de l'appareil aura été interrompue. Ce délai est suffisant pour assurer au circuit intégré présent à la surface de la carte à puce la fourniture d'impulsions d'horloge en nombre suffisant pour mener à leur terme toutes les opérations de lecture/écriture en cours.

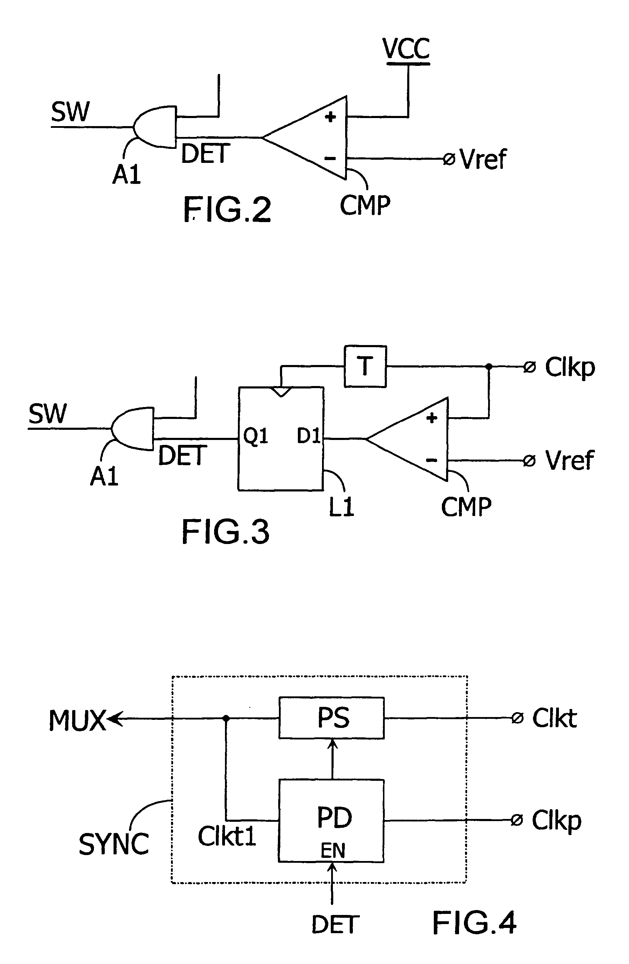

La figure 2 est un schéma électrique qui représente les moyens de détection et de commande inclus dans un appareil conforme à un mode de réalisation particulier de l'invention. Dans ce mode de réalisation, les moyens de détection comportent un comparateur CMP, qui compare la valeur de la tension d'alimentation VCC de l'appareil à une valeur prédéterminée Vref, et dont une sortie délivre un signal de sortie qui constitue le signal de détection DET. On pourra par exemple choisir pour Vref une valeur égale à 70% de la valeur nominale de la tension d'alimentation VCC. Tant que la valeur réelle de ladite tension d'alimentation VCC est supérieure à la valeur prédéterminée Vref, le signal de détection DET est au niveau logique 1 et n'a pas d'influence sur les moyens de commande, matérialisés ici par une porte ET logique A1 dont une entrée reçoit le signal de détection DET et dont une sortie fournit le signal de commande SW. Lorsque la valeur réelle de la tension d'alimentation VCC devient inférieure à la valeur prédéterminée Vref, le signal de détection DET prend un état actif, en l'occurrence le niveau logique 0, qui active les moyens de commande puisqu'il impose un niveau logique 0 en sortie de la porte ET logique A1, et donc place le signal de commande SW au niveau logique 0. La porte ET logique A1 reçoit sur au moins une autre entrée un autre signal qui détermine celui des signaux d'horloge transitoire et permanent Clkt et Clkp qui doit être aiguillé vers la borne d'horloge pendant les régimes de fonctionnement transitoire et permanent.
Ainsi, la disparition imminente du signal d'horloge permanent, qui est une conséquence inévitable de la disparition de la tension d'alimentation VCC qui est identifiée par le comparateur CMP, est détectée par les moyens de détection, et provoque l'activation des moyens de commande et la substitution du signal d'horloge transitoire Clkt au signal d'horloge permanent Clkp.

La figure 3 est un schéma électrique qui représente les moyens de détection et de commande inclus dans un appareil conforme à un autre mode de réalisation particulier de l'invention. Dans ce mode de réalisation, les moyens de détection comportent un comparateur CMP, qui compare la valeur instantanée du signal d'horloge permanent Clkp à une valeur prédéterminée Vref. On pourra par exemple choisir pour Vref une valeur égale à 70% de la valeur nominale de l'amplitude du signal d'horloge permanent Clkp. Les moyens de détection comportent en outre une bascule mémoire L1, dont une entrée de données D1 est reliée à la sortie du comparateur CMP, dont une entrée d'horloge est destinée à recevoir, via une cellule à retard T, le signal d'horloge permanent Clkp, et dont une sortie de données Q1 délivre le signal de détection DET. La bascule mémoire L1 est utile du fait qu'un signal d'horloge est constitué d'un train d'impulsions. Le résultat de la comparaison opérée par le comparateur CMP n'est donc significatif, dans cet exemple, que lorsque le signal d'horloge permanent Clkp est dans son état haut, c'est-à-dire au niveau logique 1. Ainsi, lorsque ledit signal d'horloge Clkp présente un front montant, c'est-à-dire qu'il passe du niveau logique 0 au niveau logique 1, sa valeur instantanée maximale est comparée à celle du signal de référence Vref. Le résultat de cette comparaison est présent à l'entrée de données D1 de la bascule mémoire L1 lorsque, au bout d'un délai prédéterminé introduit par la cellule à retard T, le front montant du signal d'horloge permanent Clkp parvient à l'entrée d'horloge de la bascule mémoire L1. Le résultat de la comparaison est alors mémorisé par la bascule mémoire L1, dont la sortie de données Q1 délivre le signal de détection DET.

Tant que l'amplitude du signal d'horloge permanent Clkp, c'est-à-dire sa valeur lorsqu'il est au niveau logique 1, est supérieure à la valeur prédéterminée Vref, le signal de détection DET est au niveau logique 1 et n'a pas d'influence sur les moyens de commande, matérialisés ici par une porte ET logique A1, conformément à la description qui en a été faite précédemment. Lorsque la valeur de l'amplitude du signal d'horloge permanent Clkp devient inférieure à la valeur prédéterminée Vref, le signal de détection DET prend un état actif, en l'occurrence le niveau logique 0, qui active les moyens de commande puisqu'il impose un niveau logique 0 en sortie de la porte ET logique A1, et donc place le signal de commande SW au niveau logique 0.
Ainsi, la disparition imminente du signal d'horloge permanent Clkp, qui est identifiée par le comparateur CMP, est détectée par les moyens de détection, et provoque l'activation des moyens de commande et la substitution du signal d'horloge transitoire Clkt au signal d'horloge permanent Clkp.

La figure 4 est un schéma fonctionnel décrivant un mode de réalisation possible des moyens de synchronisation SYNC inclus dans l'appareil conforme à une variante de l'invention qui a été décrit plus haut. Ces moyens de synchronisation SYNC comportent un déphaseur PS, destiné à introduire un déphasage dans le signal d'horloge transitoire Clkt. Le signal de sortie Clkt1 du déphaseur PS résultant de cette opération est fourni, en guise de signal d'horloge transitoire, au dispositif d'aiguillage MUX. Les moyens de synchronisation SYNC comprennent en outre un détecteur de phase de phase PD, destiné à mesurer le déphasage existant entre le signal de sortie du déphaseur Clkt1 et le signal d'horloge permanent Clkp. Le détecteur de phase PD n'est activé que lorsque le signal de détection DET présente un état actif. Il détermine alors, en fonction de la valeur du déphasage qu'il a mesuré, le déphasage que le déphaseur PS doit introduire dans le signal d'horloge transitoire Clkt pour que le signal de sortie Clkt1 et le signal d'horloge permanent Clkp présentent des fronts actifs simultanés. Dans d'autres modes de réalisation des moyens de synchronisation SYNC, on pourra choisir d'agir directement sur l'oscillateur transitoire dans le but de modifier la phase et/ou la fréquence de son signal de sortie Clkt. Par exemple, si l'oscillateur transitoire est un oscillateur commandé en tension, le signal d'horloge transitoire Clkt pourra être synchronisé avec le signal d'horloge permanent Clkp au moyen d'une boucle à verrouillage de phase.

## Revendications

1. Procédé permettant à une carte à puce d'échanger des données avec un appareil, ledit appareil comportant un oscillateur (OSCP), dit permanent, apte à fournir à la carte à puce un signal d'horloge (Clkp) dit permanent dans un régime de fonctionnement permanent, procédé **caractérisé en ce qu'**il comporte les étapes suivantes :
. détection, au cours du régime de fonctionnement permanent, d'une interruption intempestive de l'alimentation en énergie de l'appareil, ayant comme conséquence inévitable la disparition du signal d'horloge permanent, et
. substitution d'un signal d'horloge auxiliaire (Clkt) au signal d'horloge permanent, le signal d'horloge auxiliaire étant généré par un circuit (OSCT) capable d'opérer sous une tension plus basse que la tension nécessaire à l'appareil pour générer le signal d'horloge permanent.

2. Procédé selon la revendication 1, **caractérisé en ce que**, l'appareil incluant un module d'interface (IM) via lequel l'appareil doit échanger des données avec la carte à puce, ledit module d'interface comportant un oscillateur (OSCT), dit transitoire, apte à fournir à la carte à puce un signal d'horloge transitoire (Clkt) dans un régime de fonctionnement transitoire, le signal d'horloge auxiliaire est constitué par le signal d'horloge transitoire.

3. Procédé selon la revendication 1, **caractérisé en ce qu'**il comporte, insérée avant l'étape de substitution du signal d'horloge auxiliaire (Clkt) au signal d'horloge permanent (Clkp), une étape de synchronisation desdits signaux.

4. Procédé selon la revendication 1, **caractérisé en ce que** la détection consiste en une comparaison de la valeur d'une tension d'alimentation (VCC) de l'appareil avec une valeur prédéterminée (Vref).

5. Procédé selon à la revendication 1, **caractérisé en ce que** la détection consiste en une comparaison de la valeur de l'amplitude du signal d'horloge permanent (Clkp) avec une valeur prédéterminée (Vref).

6. Appareil apte à communiquer avec une carte à puce, lequel appareil comprend :
. un connecteur (CON) apte à être relié électriquement à un circuit intégré présent à la surface de ladite carte à puce, et présentant au moins une borne, dite d'horloge, destinée à délivrer audit circuit intégré un signal d'horloge (Clk),
. un microcontrôleur (MC) apte à échanger des données avec ledit circuit intégré,
. un oscillateur (OSCP), dit permanent, apte à générer un signal d'horloge permanent (Clkp), et
. un dispositif d'aiguillage (MUX) apte à acheminer vers la borne d'horloge le signal d'horloge permanent dans un régime de fonctionnement permanent, appareil **caractérisé en ce qu'**il comprend en outre :
. des moyens de détection (CMP) d'une interruption intempestive de l'alimentation en énergie de l'appareil, ayant comme conséquence inévitable la disparition du signal d'horloge permanent,
. des moyens de commande (A1) permettant, au cours du régime de fonctionnement permanent, l'aiguillage d'un signal d'horloge auxiliaire (Clkt) vers la borne d'horloge lorsqu'une interruption intempestive de l'alimentation en énergie de l'appareil est détectée, et
. un circuit (OSCT) pour générer le signal d'horloge auxiliaire, le circuit étant capable d'opérer sous une tension plus basse que la tension nécessaire à l'appareil pour générer le signal d'horloge permanent.

7. Appareil selon la revendication 6, **caractérisé en ce qu'**il comprend en outre un module d'interface (IM), via lequel la carte à puce est destinée à échanger des données avec le microcontrôleur (MC), ledit module d'interface comprenant un oscillateur (OSCT), dit transitoire, apte à fournir à la borne d'horloge un signal d'horloge transitoire (Clkt) dans un régime de fonctionnement transitoire, ledit signal d'horloge transitoire constituant le signal d'horloge auxiliaire.

8. Appareil selon la revendication 6, **caractérisé en ce qu'**il comprend en outre des moyens de synchronisation (SYNC) du signal d'horloge permanent et du signal d'horloge auxiliaire, destinés à être activés lorsqu'une interruption intempestive de l'alimentation en énergie de l'appareil est détectée.

9. Appareil selon la revendication 6, **caractérisé en ce que** les moyens de détection (CMP) incluent des moyens de comparaison pour comparer la valeur de la tension d'alimentation (VCC) de l'appareil avec une valeur prédéterminée (Vref), lesdits moyens de comparaison étant destinés à délivrer un signal (DET) contrôlant les moyens de commande (A1).

10. Appareil selon la revendication 6, **caractérisé en ce que** les moyens de détection (CMP) incluent des moyens de comparaison pour comparer la valeur de l'amplitude du signal d'horloge permanent (Clkp) avec une valeur prédéterminée (Vref), lesdits moyens de comparaison étant destinés à délivrer un signal (DET) contrôlant les moyens de commande (A1).

## Claims

1. A method allowing a smart card to exchange data with an apparatus which includes an oscillator (OSCP) which is referred to as a permanent oscillator and is intended to supply the smart card with a clock signal (Clkp), referred to as a permanent clock signal, in a permanent mode of operation,
which method is **characterized in that** it includes the following steps:
. detection, in the course of the permanent mode of operation, of an untimely interruption of the power supply to the apparatus, having the disappearance of the permanent clock signal as a consequence, and
. substitution of an auxiliary clock signal (Clkt) for the permanent clock signal, the
auxiliary clock signal being generated by a circuit (OSCT) which is capable to operate at a lower voltage than the voltage necessary for the apparatus to generate the permanent clock signal.

2. A method as claimed in claim 1, **characterized in that**, the apparatus including an interface module (IM) via which the apparatus is intended to exchange data with the smart card, said interface module including an oscillator (OSCT) which is referred to as a transitory oscillator and is intended to supply the smart card with a transitory clock signal (Clkt) in a transitory mode of operation, the auxiliary clock signal is formed by the transitory clock signal.

3. A method as claimed in claim 1, **characterized in that** it includes, inserted before the step for substituting the auxiliary clock signal (Clkt) for the permanent clock signal (Clkp), a step for synchronizing these signals.

4. A method as claimed in claim 1, **characterized in that** said detection consists of a comparison of the value of a supply voltage (VCC) for the apparatus with a predetermined value (Vref).

5. A method as claimed in claim 1, **characterized in that** the detection consists of a comparison of the value of the amplitude of the permanent clock signal (Clkp) with a predetermined value (Vref).

6. An apparatus which is intended to communicate with a smart card, which apparatus includes:
. a connector (CON) which is suitable for electrical connection to an integrated circuit present on the surface of said smart card and has at least one terminal which is referred to as a clock terminal and is intended to apply a clock signal (Clk) to said integrated circuit, a microcontroller (MC) which is suitable for exchange of data with said integrated circuit, an oscillator (OSCP) which is referred to as a permanent oscillator and is suitable for generation of a permanent clock signal (Clkp), and
. a switching device (MUX) which is suitable for directing the permanent clock signal to the clock terminal in a permanent mode of operation,
which apparatus is **characterized in that** it also includes:
. detection means (CMP) for detecting an untimely interruption of the power supply to the apparatus, which inevitably has the disappearance of the permanent clock signal as a consequence, and
. control means (A1) which allow, in the course of the permanent mode of operation, an auxiliary clock signal (Clkt) to be switched to the clock terminal upon detection of an untimely interruption of the power supply to the apparatus,
. a circuit (OSCT) for generating the auxiliary clock signal, which circuit is capable of operating at a lower voltage than the voltage necessary for the apparatus to generate the permanent clock signal.

7. An apparatus as claimed in claim 6, **characterized in that** it also includes an interface module (IM) via which the smart card is intended to exchange data with the microcontroller (MC), said interface module including an oscillator (OSCT) which is referred to as a transitory oscillator and is suitable for supplying the clock terminal with a transitory clock signal (Clkt) in a transitory mode of operation, said transitory clock signal constituting the auxiliary clock signal.

8. An apparatus as claimed in claim 6, **characterized in that** it also includes synchronizing means (SYNC) for synchronizing the permanent clock signal and the auxiliary clock signal, which means are intended to be activated upon detection of an untimely interruption of the power supply to the apparatus.

9. An apparatus as claimed in claim 6, **characterized in that** the detection means (CMP) include comparison means for comparing the value of the supply voltage (VCC) for the apparatus with a predetermined value (Vref), said comparison means being intended to supply a signal (DET) controlling the control means (A1).

10. An apparatus as claimed in claim 6, **characterized in that** the detection means (CMP) include comparison means for comparing the value of the amplitude of the permanent clock signal (Clkp) with a predetermined value (Vref), said comparison means being intended to deliver a signal (DET) controlling the control means (A1).

## Patentansprüche

1. Verfahren, das es einer Chipkarte ermöglicht, Daten mit einem Gerät auszutauschen, wobei das Gerät einen so genannten permanenten Oszillator (OSCP) umfasst, der der Chipkarte ein so genanntes permanentes Taktsignal (Clkp) in einem permanenten Betriebszustand bereitstellen kann, wobei das Verfahren **dadurch gekennzeichnet ist, dass** es folgende Schritte aufweist:
Detektieren während des permanenten Betriebszustands einer ungewollten Unterbrechung der Energieversorgung des Gerätes, die als unabwendbare Folge eine ungewollte Unterbrechung der Energieversorgung des Gerätes aufweist, und
Ersetzen eines Hilfstaktsignals (Clkt) durch ein permanentes Taktsignal,
wobei das Hilfstaktsignal durch eine Schaltung (OSCT) erzeugt wird, die bei einer niedrigeren Spannung als der vom Gerät zur Erzeugung des permanenten Taktsignals benötigten Spannung wirken kann.

2. Verfahren nach Anspruch 1, **dadurch gekennzeichnet, dass** das Gerät ein Schnittstellenmodul (IM) einbindet, über welches das Gerät Daten mit der Chipkarte austauschen muss, wobei das Schnittstellenmodul einen so genannten transitorischen Oszillator (OSCT) aufweist, der der Chipkarte ein transitorisches Taktsignal (Clkt) in einem transitorischen Betriebszustand bereitstellen kann, wobei das Hilfstaktsignal durch das transitorische Taktsignal gebildet wird.

3. Verfahren nach Anspruch 1, **dadurch gekennzeichnet, dass** es, eingeführt vor dem Schritt des Ersetzens des Hilfstaktsignals (Clkt) durch das permanente Taktsignal (Clkp), einen Schritt des Synchronisierens der Signale aufweist.

4. Verfahren nach Anspruch 1, **dadurch gekennzeichnet, dass** das Detektieren in einem Vergleich des Wertes einer Versorgungsspannung (VCC) des Gerätes mit einem vorgegebenen Wert (Vref) besteht.

5. Verfahren nach Anspruch 1, **dadurch gekennzeichnet, dass** das Detektieren in einem Vergleich des Wertes der Amplitude des permanenten Taktsignals (Clkp) mit einem vorgegebenen Wert (Vref) besteht.

6. Gerät, das mit einer Chipkarte kommunizieren kann, wobei das Gerät umfasst:
einen Verbinder (CON), der elektrisch mit einer integrierten Schaltung, die auf der Oberfläche der Chipkarte vorhanden ist, verbunden werden kann und mindestens eine so genannte Taktklemme aufweist, die der integrierten Schaltung ein Taktsignal (Clk) liefern soll,
einen Mikrocontroller (MC), der Daten mit dem integrierten Schaltkreis austauschen kann,
einen so genannten permanenten Oszillator (OSCP), der ein permanentes Taktsignal (Clkp) erzeugen kann und
eine Abzweigvorrichtung (MUX), die das permanente Taktsignal in einem permanenten Betriebszustand zur Taktklemme weiterleiten kann,
wobei das Gerät **dadurch gekennzeichnet ist, dass** es ferner umfasst:
Mittel zur Detektion (CMP) einer ungewollten Unterbrechung der Energieversorgung des Gerätes, die als unabwendbare Folge das Verschwinden des permanenten Taktsignals aufweisen,
Befehlsmittel (A1), die während des permanenten Betriebszustands die Abzweigung eines Hilfstaktsignals (Clkt) zur Taktklemme ermöglichen, wenn eine ungewollte Unterbrechung der Energieversorgung des Gerätes detektiert wird,
eine Schaltung (OSCT)zur Erzeugung des zusätzlichen Taktsignals, wobei die Schaltung in der Lage ist, mit einer niedrigeren Spannung als der vom
Gerät zur Erzeugung des permanenten Taktsignals benötigten Spannung zu wirken.

7. Gerät nach Anspruch 6, **dadurch gekennzeichnet, dass** es außerdem ein Schnittstellenmodul (IM) umfasst, über welches die Chipkarte Daten mit dem Mikrocontroller (MC) austauschen soll, wobei das Schnittstellenmodul einen so genannten transitorischen Oszillator (OSCT) aufweist, der der Taktklemme ein transitorisches Taktsignal (Clkt) in einem transitorischen Betriebszustand bereitstellen kann, wobei das transitorische Taktsignal das Hilfstaktsignal bildet.

8. Gerät nach Anspruch 6, **dadurch gekennzeichnet, dass** es außerdem Mittel zur Synchronisation (SYNC) des permanenten Taktsignals und des Hilfstaktsignals aufweist, die aktiviert werden sollen, wenn eine ungewollte Unterbrechung der Energieversorgung des Gerätes detektiert wird.

9. Gerät nach Anspruch 6, **dadurch gekennzeichnet, dass** die Detektionsmittel (CMP) Vergleichsmittel einbinden, um den Wert der Versorgungsspannung (VCC) des Gerätes mit einem vorgegebenen Wert (Vref) zu vergleichen, wobei die Vergleichsmittel ein Signal (DET), das die Befehlsmittel (A1) kontrolliert, liefern sollen.

10. Gerät nach Anspruch 6, **dadurch gekennzeichnet, dass** die Detektionsmittel (CMP) Vergleichsmittel einbinden, um den Wert der Amplitude des permanenten Taktsignals (Clkp) mit einem vorgegebenen Wert (Vref) zu vergleichen, wobei die Vergleichsmittel ein Signal (DET), das die Befehlsmittel (A1) kontrolliert, liefert.
